# EUROPEAN PATENT APPLICATION

(11) **EP 4 773 271 A1**
(43) Date of publication of application: **08.07.2026**
(21) Application number: 24878423.3
(22) Date of filing: 30.04.2024
(51) Int. Cl.: H01M 10/04, H01M 50/466, H01M 10/0587, H01M 50/531

(54) **ELECTRODE ASSEMBLY, BATTERY CELL, BATTERY AND ELECTRIC DEVICE**

(30) Priority: 18.10.2023 CN 202311348796
(71) Applicant: Contemporary Amperex Technology Co., Limited, Ningde, Fujian 352100 (CN)
(72) Inventor: WANG, Song, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN); KONG, Pan, Ningde, Fujian 352100 (CN)
(74) Representative: Ziebig Hengelhaupt Intellectual Property Attorneys Patentanwaltskanzlei PartGmbB
(86) International application number: PCT/CN2024/090932
(87) International publication number: WO 2025/081770

(57) **Abstract**

The present application applies to the field of batteries, and provides an electrode assembly, a battery cell, a battery, and a power consuming apparatus. An electrode assembly (100) includes a first electrode plate (10) and a separator (20). The separator (20) includes two separator layers (21) formed by folding, and the two separator layers (21) cover two opposite ends of the first electrode plate (10) in a thickness direction thereof, respectively. The separator layer (21) is provided with a first edge portion (211) extending beyond an end portion of the first electrode plate (10) in a width direction of the first electrode plate (10). The first edge portion (211) is opposite to a folded end of the separator (20). The first edge portions (211) of the two separator layers (21) are connected to each other and form a first joint portion (22). The electrode assembly provided in the embodiments of the present application can resolve the problem that a separator is folded over, and consequently a short circuit between adjacent electrode plates is caused.

## Description

The present application claims priority to Chinese Patent Application No. 202311348796.5, filed with the China National Intellectual Property Administration on October 18, 2023 and entitled "ELECTRODE ASSEMBLY, BATTERY CELL, BATTERY, AND POWER CONSUMING APPARATUS", which is incorporated herein by reference in its entirety.

### TECHNICAL FIELD

The present application relates to the field of batteries, and in particular, to an electrode assembly, a battery cell, a battery, and a power consuming apparatus.

### BACKGROUND

Energy conservation and emission reduction are the key to the sustainable development of the automobile industry, and electric vehicles have become an important part of the sustainable development of the automobile industry due to their advantages of energy conservation and environment protection. For the electric vehicles, the battery technology is an important factor that relates to the development of the electric vehicles.

In the structure of the battery, an electrode assembly is an important component, and a winding and forming process of the electrode assembly is a vital part. In a process of winding the electrode assembly, the separator is likely to be folded over, consequently causing contact and a short circuit between adjacent electrode plates, making the electrode assembly have a fault, and affecting the yield of a battery.

### SUMMARY

In view of this, the present application provides an electrode assembly, a battery cell, a battery, and a power consuming apparatus, to resolve the problem that a short circuit occurs between adjacent electrode plates when a separator is folded over.

An embodiment of a first aspect of the present application provides an electrode assembly, including:
a first electrode plate; and
a separator. The separator includes two separator layers formed by folding, and the two separator layers cover two opposite ends of the first electrode plate in a thickness direction thereof, respectively.

The separator layer is provided with a first edge portion extending beyond an end portion of the first electrode plate in a width direction of the first electrode plate, the first edge portion is opposite to a folded end of the separator, and the first edge portions of the two separator layers are connected to each other and form a first joint portion.

The electrode assembly provided in the embodiment of the present application includes the first electrode plate and the separator. The separator includes the two separator layers formed by folding, and the two separator layers cover the two ends of the first electrode plate in the thickness direction thereof, respectively. Portions of the two separator layers extending beyond the first electrode plate are connected to each other. In this way, the separator can completely wrap the first electrode plate, relative positions of the first electrode plate and the separator are fixed, and a problem that the separator is folded over is not likely to occur. Even if the separator is folded over, a problem of contact between cathode and anode plates does not occur, thereby reducing a case in which an electrode plate is exposed out of the separator and is in contact with an electrode plate adjacent thereto and a short circuit occurs, and improving the yield of a battery. In addition, the first edge portions of the two separator layers are connected to each other by using the first joint portion, namely, positions of the separator and the first electrode plate can be relatively fixed. The separator does not need to be compounded with the first electrode plate. The portion of the separator covering the first electrode plate is not subjected to rolling, so that the height of particles on a surface of the separator does not decrease under rolling. The separator can effectively maintain a gap between electrode plates, thereby facilitating subsequent maintenance of a kinetic performance of a battery cell. In addition, the air permeability of the portion of the separator covering the first electrode plate does not deteriorate under rolling.

In some embodiments, the first electrode plate includes an electrode plate body and a tab extending outward from an edge of the electrode plate body, the tab and the first edge portion are disposed on a same side of the electrode plate body, and the first edge portion covers a part of the tab in the width direction of the first electrode plate.

By using the above technical solution, the separator can completely wrap the electrode plate body, the portion of the separator covering the electrode plate body is not likely to be folded over, and even if an end portion of the separator is folded over, the electrode plate body is not exposed to cause a short circuit. The first edge portion covers a part of the tab, so that an exposed portion of the tab is connected to an electrode terminal.

In some embodiments, a length of the tab is less than or equal to a length of the electrode plate body.

By using the above technical solution, the separator may wrap the first electrode plate of a die-cut tab structure or the first electrode plate of an all-tab structure. In such an electrode assembly, the relative positions of the separator and the first electrode plate can be fixed, reducing a probability of folding over of the separator. Even if the separator is folded over, it is not likely to cause contact and a short circuit between adjacent electrode plates.

In some embodiments, the first joint portion is disposed partially overlapping with the tab, and the tab is compounded and bonded to the first edge portion; or the first joint portion and the tab are disposed in a staggered manner.

By using the above technical solution, the tab may be compounded and bonded to the separator layer, and the tab and the first joint portion may further be disposed in the staggered manner, which can be flexibly selected according to parameters of the electrode assembly and a process condition.

In some embodiments, the separator layer is further provided with a covering portion covering the electrode plate body, where the covering portion is in contact with the electrode plate body in an attaching manner, or a gap is formed between the covering portion and the electrode plate body.

By using the above technical solution, after being folded, the separator wraps the first electrode plate and the first edge portions on a tab side are compounded and connected, so that the separator can be stably fixed to the first electrode plate by using the joint portion, the separator is not likely to be separated from the first electrode plate, and the first electrode plate is not likely to be exposed to the outside. The separator does not need to be connected to the first electrode plate by rolling or another process, thereby enabling the covering portion to have relatively good air permeability.

In some embodiments, the air permeability of the covering portion is in a range of 100 s/cc to 300 s/cc.

By using the above technical solution, rolling compounding does not need to be performed on the separator and the first electrode plate of the electrode assembly, so that the air permeability of the covering portion can be set in the range of 100 s/cc to 300 s/cc, thereby enabling ions to have a relatively high transmission efficiency, and improving the performance of the battery.

In some embodiments, the separator layer is further provided with a second edge portion located at the folded end, and the second edge portion extends beyond the end portion of the first electrode plate in the width direction of the first electrode plate.

By using the above technical solution, the second edge portion extends beyond the end portion of the first electrode plate, so that the two second edge portions can jointly wrap the end portion of the first electrode plate.

In some embodiments, end portions of the two second edge portions are integrally connected, and a width of the second edge portion is 1 mm to 5 mm.

By using the above technical solution, it is convenient for the separator to wrap the first electrode plate, and it is not likely to cause the first electrode plate to move between the two separator layers.

In some embodiments, the two second edge portions are connected to each other and form a second joint portion.

By using the above technical solution, the separator layer is also compounded and bonded to the folded end of the separator, that is, the separator has the joint portions formed on both opposite sides of the first electrode plate. In this way, the first electrode plate is not likely to move between the two separator layers, which is beneficial for stacking alignment of the first electrode plate and a second electrode plate, thereby helping ensure the electrical performance of the electrode assembly.

In some embodiments, in the width direction of the first electrode plate, a width of the second edge portion is 1 mm to 20 mm.

By satisfying the above range, the two opposite second edge portions can be conveniently compounded and bonded, and the second edge portion does not need to be set excessively wide, so as to reduce a probability of folding over of the second edge portion.

In some embodiments, the second joint portion and the first joint portion are symmetrically disposed.

In some embodiments, in the width direction of the first electrode plate, a width by which the tab extends beyond the first edge portion is 1 mm to 40 mm.

By satisfying the above condition, a range of a width by which the tab extends beyond the separator is set, and a portion of the tab exposed outside the separator layer can be stably connected to the electrode terminal.

In some embodiments, in the width direction of the first electrode plate, a width of a portion of the tab covered by the separator layer occupies 1/3 to 2/3 of a width of the tab.

By satisfying the above condition, a range of a width by which the tab extends beyond the separator is set, and a portion of the tab exposed outside the separator layer can be stably connected to the electrode terminal.

In some embodiments, in the width direction of the first electrode plate, a width of the first edge portion is 1 mm to 20 mm.

By satisfying the above condition, the two opposite first edge portions both extend beyond the electrode plate body and can be compounded and bonded on an outer side of the electrode plate body, so that the relative positions of the separator and the first electrode plate are fixed, the separator is not likely to be folded over, and a tab body is not likely to be exposed. In addition, rolling compounding does not need to be performed on the separator and the electrode plate body, thereby avoiding that the air permeability of the separator above the electrode plate body deteriorates and the gap between the electrode plates cannot be effectively maintained.

In some embodiments, in the width direction of the first electrode plate, a width of the first joint portion is 2 mm to 20 mm.

By satisfying the above condition, the width of the first joint portion is less than or equal to the width of the first edge portion, and rolling compounding does not need to be performed on the separator and the electrode plate body.

In some embodiments, in the width direction of the first electrode plate, a misalignment length of the two first edge portions is 2 mm to 5mm.

By controlling a range of the misalignment length of the first edge portions, the first joint portion can have a sufficient size, so that the two separator layers can be fixedly connected stably.

In some embodiments, the first joint portion is continuously distributed in a length direction of the separator; or a plurality of first joint portions are distributed at intervals in the length direction of the separator.

According to the electrode assembly provided in the embodiment of the present application, the two first edge portions may be connected to each other to form the continuous first joint portion or the plurality of first joint portions disposed at intervals, and in both cases, the two separator layers can be stably connected, and a manufacturing manner is flexible and convenient.

In some embodiments, the plurality of first joint portions are disposed at equal intervals, a length of the first joint portion is greater than 2 mm, and an interval between every two adjacent first joint portions is 2 mm to 100 mm.

By using the above technical solution, the two separator layers are connected to each other through the plurality of first joint portions, and the length of the first joint portion satisfies the above condition, so that the two separator layers can be stably and reliably connected, and are not likely to be separated to expose the electrode plate body. The interval between the first joint portions has a relatively large selection range and may be flexibly set according to the parameters of the electrode assembly and the process condition.

In some embodiments, a connection pattern is formed on the first joint portion, and the two separator layers are connected at the connection pattern.

By using the above technical solution, the two separator layers are connected at the connection pattern, so as to implement compounding and connecting. The connection pattern can improve the adhesion strength of the two separator layers, thereby further reducing a probability of separation of the two separator layers.

In some embodiments, the connection pattern includes at least one of a dot pattern, a stripe pattern, a polygonal pattern, a circular pattern, and an elliptic pattern.

By using the above technical solution, the two separator layers are not likely to be separated along the connection pattern, thereby further reducing the probability of separation of the two separator layers and the probability of folding over of the separator.

In some embodiments, the electrode assembly further includes a second electrode plate. The first electrode plate, the separator, and the second electrode plate are wound. One of the first electrode plate and the second electrode plate is a cathode plate, and the other is an anode plate.

By using the above technical solution, the electrode assembly is of a wound structure, and the first electrode plate wrapped by the separator may be the cathode plate or the anode plate. Therefore, a case in which the separator is folded over to cause a short circuit between the cathode plate and the anode plate is not likely to occur in the wound electrode assembly.

An embodiment of a second aspect of the present application provides a battery cell, including the electrode assembly according to the first aspect.

An embodiment of a third aspect of the present application provides a battery, including the battery cell according to the second aspect.

An embodiment of a fourth aspect of the present application provides a power consuming apparatus, including the battery according to the third aspect.

The above description only refers to an overview of the technical solutions of the present application. In order to understand the technical means of the present application more clearly such that it can be implemented according to the content of the specification, and to make the above and other purposes, features, and advantages of the present application more apparent, specific implementations of the present application are listed below.

### BRIEF DESCRIPTION OF THE DRAWINGS

To describe the technical solutions in the embodiments of the present application more clearly, the following briefly introduces the accompanying drawings required for describing the embodiments or conventional technologies. Apparently, the accompanying drawings in the following description show only some embodiments of the present application, and those of ordinary skill in the art may still derive other drawings from these accompanying drawings without creative efforts.
FIG. 1 is a schematic structural view of a power consuming apparatus according to some embodiments of the present application;
FIG. 2 is a schematic view of a breakdown structure of a battery according to some embodiments of the present application;
FIG. 3 is a schematic view of a breakdown structure of a battery cell according to some embodiments of the present application;
FIG. 4 is a schematic structural view of an electrode assembly according to some embodiments of the present application;
FIG. 5 is a sectional view of the electrode assembly shown in FIG. 4 along an II-II line;
FIG. 6 is a partial schematic view of a separator and a first electrode plate in the electrode assembly shown in FIG. 5;
FIG. 7 to FIG. 9 are schematic structural views of different first joint portions in the electrode assembly according to some embodiments of the present application;
FIG. 10 is a schematic structural view of an electrode assembly according to some other embodiments of the present application;
FIG. 11 is a partial schematic view of the electrode assembly shown in FIG. 10;
FIG. 12 is a sectional view of the electrode assembly shown in FIG. 11 along an III-III line;
FIG. 13 is a partial schematic view of a separator and a first electrode plate in the electrode assembly shown in FIG. 12;
FIG. 14 to FIG. 16 are schematic structural views of different second joint portions in the electrode assembly according to some other embodiments of the present application;
FIG. 17 is a sectional view of the battery cell shown in FIG. 3 along I-I in some embodiments;
FIG. 18 is a sectional view of the battery cell shown in FIG. 3 along I-I in some other embodiments;
FIG. 19 is a schematic structural view of a battery cell according to still some other embodiments; and
FIG. 20 is a schematic structural view of a battery cell according to yet some other embodiments.

Meanings of reference numerals in the drawings are as follows:
100, electrode assembly;
10, first electrode plate; 11, electrode plate body; 12, tab;
20, separator; 21, separator layer; 211, first edge portion; 212: covering portion; 213, second edge portion; 22, first joint portion; 221: connection pattern; 23, second joint portion; 30, second electrode plate;
200, battery cell; 40, case; 50, end cover; 51, electrode terminal;
300, battery; 60, box body; 61, first portion; 62, second portion;
1000, power consuming apparatus; 400, controller; 500, motor.

### DETAILED DESCRIPTION

The embodiments of the technical solutions of the present application will be described in detail below with reference to the drawings. The following embodiments are only used to describe the technical solutions of the present application more explicitly, and are thus only interpreted as examples, rather than used to limit the protection scope of the present application.

Unless otherwise defined, meanings of all technical and scientific terms used herein are the same as those usually understood by those skilled in the art to which the present application belongs. The terms used herein are merely intended to describe specific embodiments, but are not intended to limit the present application. The terms "include" and "have" and any variants thereof in the specification and claims of the present application and in the brief description of the drawings are intended to cover non-exclusive inclusion.

In the description of the embodiments of the present application, the technical terms "first", "second", and the like are only used to distinguish different objects, and should not be understood as indicating or implying relative importance or implying the number, a specific order, or a primary and secondary relationship of indicated technical features. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of embodiments of the present application, the term "and/or" shows only an association relationship for describing associated objects and represents that three relationships may be present. For example, A and/or B may represent the presence of the three cases: A alone, both A and B, and B alone. In addition, the character "/" herein generally indicates an "or" relationship between the associated objects before and after "/".

In the description of the embodiments of the present application, the term "a plurality of" refers to more than two (including two), and similarly, "a plurality of groups" refers to more than two groups (including two groups); and "a plurality of pieces" refers to more than two pieces (including two pieces).

In the description of the embodiments of the present application, the orientation or positional relationships indicated by the technical terms "center", "longitudinal", "transverse", "length", "width", "thickness", "upper", "lower", "front", "back", "vertical", "horizontal", "top", "bottom", "inner", "outer", and the like are based on the orientation or positional relationships shown in the accompanying drawings, and are only for convenience of description of the embodiments of the present application and simplification of the description, rather than indicating or implying that the indicated apparatus or element must have a specific orientation, or be constructed and operated in a specific orientation, and therefore, cannot be understood as a limitation to the embodiments of the present application.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meaning of the above terms in the embodiments of the present application may be understood according to specific situations.

At present, from the development of the market situation, the application of power batteries is becoming more extensive. Power batteries are not only used in energy storage power source systems such as hydropower, thermal power, wind power and solar power stations, but are also widely applied in electric transportation vehicles such as electric bicycles, electric motorcycles, electric vehicles, as well as in military equipment, aerospace, and other fields. With continuously increasing application of the power batteries, the market demand is also constantly expanding.

In the structure of the battery, the electrode assembly is an important component, and a winding or stacking forming process of the electrode assembly is a vital part. In a current electrode assembly, an area of a separator is mostly the same as or approximately the same as an area of an electrode plate. However, in a winding or stacking process of the electrode assembly, the separator is prone to abnormal cases such as folding over. In this way, the electrode plate is likely to be exposed when the separator is folded over. One of the functions of the separator is to separate a cathode plate and an anode plate adjacent to each other so as to reduce occurrence of a short circuit and the like caused by contact between the cathode plate and the anode plate, thereby reducing a fault of the electrode assembly and reducing negative effects on the yield of the electrode assembly. Therefore, when the separator is folded over, it is likely to cause a short circuit between the cathode plate and the anode plates on two sides of the separator, consequently causing a fault in the electrode assembly, and affecting the yield of the battery.

To resolve a problem that a short circuit between the electrode plates may be caused by folding over of the separator, an embodiment of the present application provides an electrode assembly. Two separator layers are formed after a separator is folded. The two separator layers are respectively disposed at two opposite ends of a first electrode plate in a thickness direction thereof. The separator layer is provided with a first edge portion extending beyond an end portion of the first electrode plate in a width direction of the first electrode plate, the first edge portion is disposed at an end of the separator layer away from a folded end, and the first edge portions of the two separator layers are connected to each other and form a first joint portion.

In such an electrode assembly, ends of the two separator layers located at the folded end are integrally connected, and the portions of the two separator layers extending beyond the first electrode plate are connected to each other. In this way, the separator can wrap the first electrode plate, relative positions of the first electrode plate and the separator are fixed, and a problem that the separator is folded over is not likely to occur. Even if the separator is folded over, a problem of contact between the cathode and anode plates does not occur, thereby reducing a case in which an electrode plate is exposed out of the separator and is in contact with an electrode plate adjacent thereto and a short circuit occurs, and improving the yield of a battery.

A battery cell disclosed in the embodiments of the present application can be used in a power consuming apparatus using a battery as a power source or various energy storage systems using batteries as energy storage elements. The power consuming apparatus may be, but is not limited to, a mobile phone, a tablet, a laptop, an electric toy, an electric tool, a battery cart, an electric vehicle, a ship, and a spacecraft. The electric toy may include a fixed or mobile electric toy, such as a game machine, an electric vehicle toy, an electric ship toy, and an electric airplane toy, and the spacecraft may include an airplane, a rocket, an aerospace plane, and a spaceship.

For ease of description, the following embodiment is described by using an example in which a power consuming apparatus 1000 in an embodiment of the present application is a vehicle.

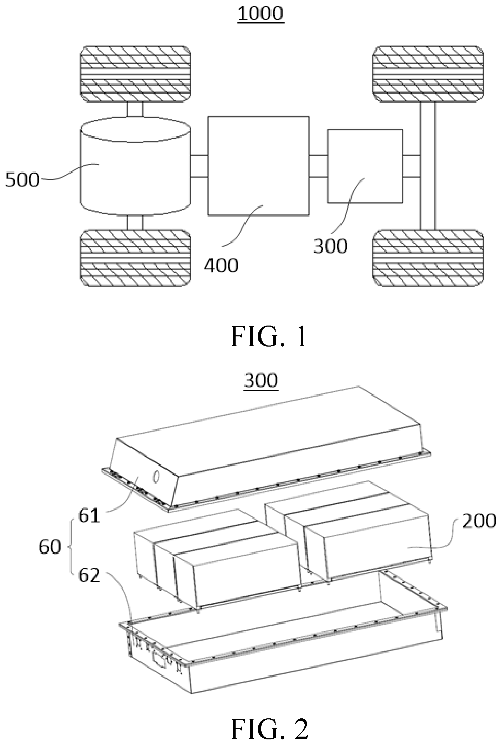

Referring to FIG. 1, FIG. 1 is a schematic structural view of a vehicle according to some embodiments of the present application. The vehicle may be an oil-fueled vehicle, a gas-powered vehicle, or a new energy vehicle. The new energy vehicle may be an all-electric vehicle, a hybrid electric vehicle, an extended-range electric vehicle, or the like. A battery 300 is disposed inside the vehicle, and the battery 300 may be disposed at a bottom, head, or tail of the vehicle. The battery 300 may be configured to supply power to the vehicle. For example, the battery 300 may serve as an operating power source of the vehicle. The vehicle may further include a controller 400 and a motor 500. The controller 400 is configured to control the battery 300 to supply power to the motor 500, for example, to meet a demand for working power during starting, navigation, and driving of the vehicle.

In some embodiments of the present application, the battery 300 not only may serve as the operating power source of the vehicle, but also may serve as a driving power source of the vehicle, thus replacing or partially replacing fuel or natural gas to provide driving power for the vehicle.

Referring to FIG. 2, FIG. 2 is an exploded view of a battery 300 according to some embodiments of the present application. The battery 300 includes a box body 60 and a battery cell 200, where the battery cell 200 is accommodated in the box body 60. The box body 60 is used to provide an accommodating space for the battery cell 200. The box body 60 may adopt a variety of structures. In some embodiments, the box body 60 may include a first portion 61 and a second portion 62. The first portion 61 and the second portion 62 cover each other, and the first portion 61 and the second portion 62 jointly define an accommodating space for accommodating the battery cell 200. The second portion 62 may be of a hollow structure with an opening at one end, and the first portion 61 may be of a plate-like structure, where the first portion 61 covers the opening side of the second portion 62, so that the first portion 61 and the second portion 62 together define the accommodating space. The first portion 61 and the second portion 62 may each be of a hollow structure with an opening in one side, where the opening side of the first portion 61 covers the opening side of the second portion 62. Of course, the box body 60 formed by the first portion 61 and the second portion 62 may be in various shapes, such as a cylinder and a cuboid.

In the battery 300, there may be a plurality of battery cells 200, and the plurality of battery cells 200 may be connected in series or parallel or parallel-series, where the parallel-series connection means that the plurality of battery cells 200 are connected in both series and parallel. The plurality of battery cells 200 may be directly connected in series, parallel, or series-parallel together, and then the whole formed by the plurality of battery cells 200 may be accommodated in the box body 60. Certainly, the battery 300 may also be in the form of a battery 300 module formed by the plurality of battery cells 200 that are first connected in series, parallel, or series-parallel. A plurality of battery 300 modules are then connected in series, parallel, or series-parallel to form a whole which is accommodated in the box body 60. The battery 300 may also include other structures, for example, the battery 300 may also include a bus component for achieving electrical connection among the plurality of battery cells 200.

Each battery cell 200 may be a secondary battery or a primary battery, and may alternatively be a lithium-sulfur battery, a sodium-ion battery, or a magnesium-ion battery, but is not limited thereto. The battery cell 200 may be in a cylindrical shape, a flat body shape, a cuboid shape, or any other shape.

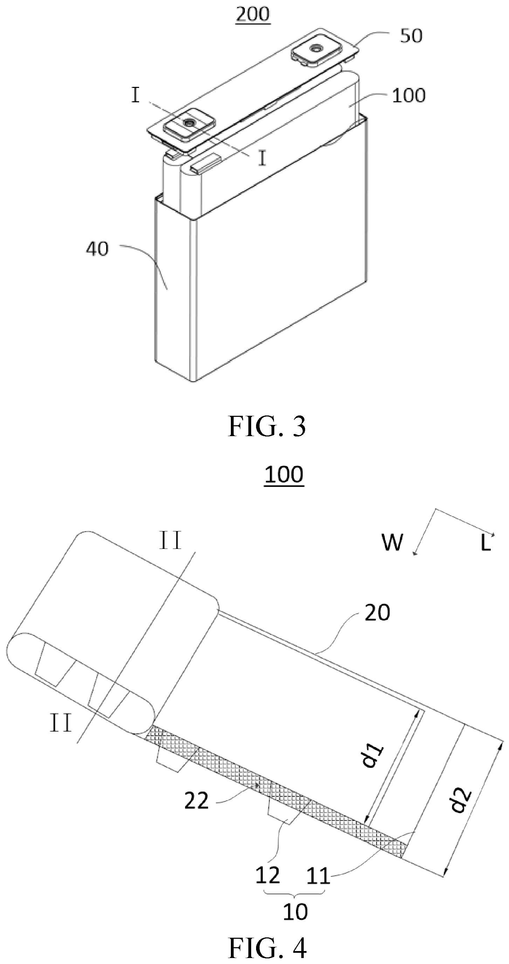

Referring to FIG. 3, FIG. 3 is a schematic diagram of a breakdown structure of a battery cell 200 according to some embodiments of the present application. The battery cell 200 is a smallest unit forming the battery 300. As shown, the battery cell 200 includes a case 40, an end cover 50, an electrode assembly 100, and other functional components.

The end cover 50 is a component that covers an opening of the case 40 to isolate the internal environment of the battery cell 200 from the external environment. Without limitation, the shape of the end cover 50 may match the shape of the case 40 to fit the case 40. Optionally, the end cover 50 may be made of a material with specified hardness and strength (for example, aluminum alloy), so that the end cover 50 is not likely to deform under extrusion and collision, thereby enabling the battery cell 200 to have a higher structural strength and enhanced safety performance. Functional components such as an electrode terminal 51 may be disposed on the end cover 50. The electrode terminal 51 may be configured to be electrically connected to the electrode assembly 100 to output or input electric energy of the battery cell 200. In some embodiments, the end cover 50 may also be provided with a pressure relief mechanism configured to relieve internal pressure when the internal pressure or temperature of the battery cell 200 reaches a threshold. The end cover 50 may also be made of various materials, such as copper, iron, aluminum, stainless steel, aluminum alloy, and plastic, which are not particularly limited in the embodiment of the present application. In some embodiments, an insulator may also be arranged on an inner side of the end cover 50. The insulator can be configured to isolate electrical connection components in the case 40 from the end cover 50, thereby reducing a risk of a short circuit. Exemplarily, the insulator may be plastic, rubber, or the like.

The case 40 is a component used to form the internal environment of the battery cell 200 together with the end cover 50, where the formed internal environment may be used for accommodating the electrode assembly 100, an electrolytic solution, and other components. The case 40 and the end cover 50 may be separate components. An opening may be provided in the case 40. The end cover 50 covers the opening to form the internal environment of the battery cell 200. Without limitation, the end cover 50 and the case 40 may also be integrated. Specifically, the end cover 50 and the case 40 may form a shared connection surface before other components are arranged inside the case, and then the end cover 50 covers the case 40 when the inside of the case 40 needs to be enclosed. The case 40 may be in a variety of shapes and sizes, such as a cuboid shape, a cylindrical shape, and a hexagonal prism shape. Specifically, the shape of the case 40 may be determined based on a specific shape and size of the electrode assembly 100. The case 40 may be made of various materials, such as copper, iron, aluminum, stainless steel, aluminum alloy, and plastic, which are not particularly limited in the embodiments of the present application.

The electrode assembly 100 is a component of the battery cell 200 where an electrochemical reaction occurs. The case 40 may include one or more electrode assemblies 100. The electrode assembly 100 is mainly formed by winding or stacking the cathode plate and the anode plate. Usually, a separator 20 is disposed between the cathode plate and the anode plate. Portions of the cathode plate and the anode plate with active substances constitute an electrode plate body of the electrode assembly 100, while portions of the cathode plate and the anode plate without active substances separately constitute a tab. A cathode tab and an anode tab may be jointly located at one end of the electrode plate body or respectively located at two ends of the electrode plate body. In a charging and discharging process of the battery 300, a cathode active substance and an anode active substance react with an electrolytic solution, and the tab is connected to the electrode terminal 51 to form a current loop.

An embodiment of a first aspect of the present application provides an electrode assembly 100. Referring to FIG. 4 to FIG. 7, a direction W is a width direction of a first electrode plate 10, a direction L is a length direction of the first electrode plate 10, and T is a thickness direction of the first electrode plate 10. The electrode assembly 100 includes a first electrode plate 10 and a separator 20. The separator 20 includes two separator layers 21 formed by folding, and the two separator layers 21 cover two opposite ends of the first electrode plate 10 in the thickness direction thereof, respectively. The separator layer 21 is provided with a first edge portion 211 extending beyond an end portion of the first electrode plate 10 in the width direction of the first electrode plate 10. The first edge portion 211 is opposite to a folded end of the separator 20. The first edge portions 211 of the two separator layers 21 are connected to each other and form a first joint portion 22.

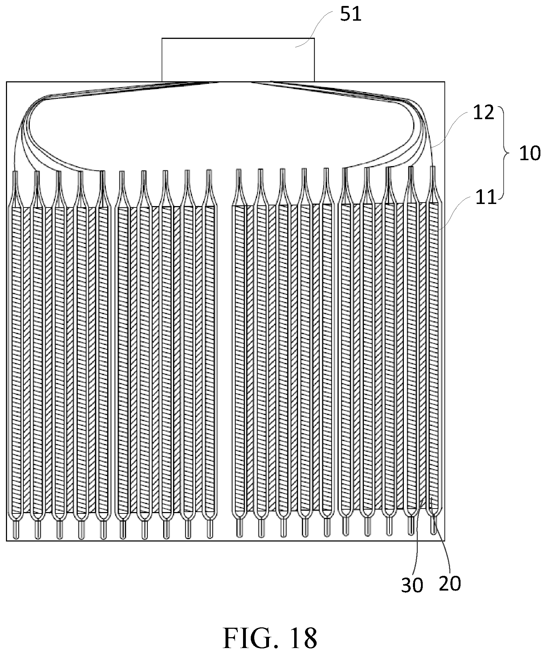

Referring to FIG. 4 and FIG. 18, the first electrode plate 10 is covered by the separator 20, d1 indicates a width of an electrode plate body of the first electrode plate 10, d2 indicates a width of the separator layer 21, and d1 is less than d2.

The first electrode plate 10 and the separator 20 are each in a continuous integral structure. In some other embodiments, the first electrode plate 10 may also be a plurality of electrode plates in split structures, and the continuous separator 20 is disposed on two sides of the plurality of electrode plates in the thickness direction of the electrode plate.

The first electrode plate 10 and the separator 20 are in a state of folding back and forth for a plurality of times, so that the first electrode plate 10 and the separator 20 are bent back and forth approximately in a Z shape. A second electrode plate 30 is disposed between two adjacent layers of first electrode plates 10 in a bent structure, and the first electrode plate 10 and the second electrode plate 30 are separated by using the separator 20, to form the electrode assembly 100 of a laminated structure. Polarities of the first electrode plate 10 and the second electrode plate 30 are opposite. When one of the first electrode plate and the second electrode plate is the cathode plate, the other is the anode plate. The separator 20 is a microporous film configured to separate the first electrode plate 10 and the second electrode plate 30, is made of a high-polymer functional material having nanoscale micropores, is configured to prevent a short circuit between two electrode plates caused by contact, and can also allow electrolyte ions to pass through.

The separator 20 is used to wrap the first electrode plate 10. The separator 20 includes the two separator layers 21 formed by folding, that is, the separator 20 is folded in a width direction thereof to form the two stacked separator layers 21. The two separator layers 21 are integrally connected at the folded end of the separator 20. The separator 20 may be folded in half from a center thereof to form the two separator layers 21 having equal sizes. Alternatively, the separator 20 may be folded from a position close to the center thereof to form the two separator layers 21 having different sizes. The two separator layers 21 cover the two opposite ends of the first electrode plate 10 in the thickness direction thereof, respectively, so that the separator 20 can completely wrap the electrode plate body of the first electrode plate 10, thereby avoiding a short circuit occurring due to direct contact between the first electrode plate 10 and the second electrode plate 30.

Each separator layer 21 is provided with a first edge portion 211 extending beyond an end portion of the first electrode plate 10, and the first edge portion 211 is located at one end of the separator layer 21 away from the folded end of the separator 20. Thus, it can be learned that a width of the separator 20 is greater than 2 times a width of the first electrode plate 10. In this way, the separator 20 can wrap the first electrode plate 10. The two separator layers 21 are integrally connected at the folded end of the separator 20, that is, the two separator layers 21 can jointly wrap the first electrode plate 10 at the folded end. The two separator layers 21 are connected to each other at an open end of the separator 20 and form the first joint portion 22, so that the two separator layers 21 can wrap the first electrode plate 10 at both opposite ends of the first electrode plate 10 in the width direction thereof, and the first electrode plate 10 is accommodated in an accommodating space formed by the separator 20.

The first edge portions 211 of the two separator layers 21 may be fixedly connected in a plurality of manners. For example, the two first edge portions 211 may be connected in at least one manner including rolling, fusion, ultrasonic welding, and adhesive bonding. The "first joint portion" is a portion where the two first edge portions 211 are fixedly connected to each other, and the two separator layers 21 are compounded and bonded by using the first joint portion 22. The "compounding and bonding" referred to in the embodiment of the present application refers to being compounded and bonded. The compounding and bonding may be implemented by at least one of rolling of a rolling device, heat sealing and fusion sealing, ultrasonic rolling welding of weld marks, adhesive bonding and compounding, and the like.

The first joint portion 22 may completely coincide with the first edge portion 211, or a length of the first joint portion 22 may be less than a length of the first edge portion 211. There may be one or more first joint portions 22. When there are a plurality of first joint portions 22, the plurality of first joint portions 22 are disposed at intervals in an extension direction of the first edge portion 211.

Optionally, compounding and connecting positions of the two separator layers 21 are both located in the first edge portion 211. In this case, the electrode plate body 11 does not need to be rolled. It can be understood that the compounding and connecting positions of the two separator layers 21 may also extend from the first edge portion 211 to the electrode plate body 11.

The electrode assembly 100 provided in the embodiment of the present application includes the first electrode plate 10 and the separator 20. The separator 20 includes the two separator layers 21 formed by folding, the two separator layers 21 cover the two ends of the first electrode plate 10 in the thickness direction thereof, respectively, and the portions of the two separator layers 21 extending beyond the first electrode plate 10 are connected to each other. In this way, the separator 20 can completely wrap the first electrode plate 10, the relative positions of the first electrode plate 10 and the separator 20 are fixed, and a problem that the separator 20 is folded over is not likely to occur. Even if the separator 20 is folded over, a problem of contact between the cathode and anode plates does not occur, thereby reducing a case in which the electrode plate is exposed outside the separator 20 and is in contact with an electrode plate adjacent thereto and a short circuit occurs, and improving the yield of a battery. In addition, the first edge portions 211 of the two separator layers 21 are connected to each other by using the joint portion, so that the positions of the separator 20 and the first electrode plate 10 can be relatively fixed. The separator 20 does not need to be compounded to the first electrode plate 10. The portion of the separator 20 covering the first electrode plate 10 is not subjected to rolling, so that the height of particles on a surface of the separator 20 does not decrease under rolling. The separator 20 can effectively maintain a gap between electrode plates, thereby facilitating subsequent maintenance of a kinetic performance of a battery cell. In addition, the air permeability of the portion of the separator 20 covering the first electrode plate 10 does not deteriorate under rolling.

In some embodiments, the first electrode plate 10 includes an electrode plate body 11 and a tab 12 extending outward from an edge of the electrode plate body 11. The tab 12 and the first edge portion 211 are disposed on a same side of the electrode plate body 11, and the first edge portion 211 covers a part of the tab 12 in the width direction of the first electrode plate 10.

Specifically, the first electrode plate 10 includes a current collector and an active substance layer, the electrode plate body 11 is a portion of the current collector coated with the active substance layer, and the tab 12 projects out of a side of the electrode plate body 11 and is not coated with the active substance layer.

The tab 12 may be manufactured by means of die cutting, or the tab 12 is directly formed by the portion of the current collector that is not coated with the active substance layer, that is, the first electrode plate 10 is of an all-tab structure.

When the first electrode plate 10 is of a continuously wound structure, there may be a plurality of tabs 12, and the plurality of tabs 12 are disposed in a stacked manner to improve a current passage capacity. The second electrode plate 30 also includes a tab 12. The tab 12 on the first electrode plate 10 and the tab 12 on the second electrode plate 30 are respectively cathode and anode tabs 12 and are disposed in a staggered manner.

The first edge portion 211 of the separator layer 21 is located on a side of the first electrode plate 10 provided with the tab 12, and the first edge portion 211 covers a part of the tab 12 in the width direction of the first electrode plate 10, so that the separator 20 wraps the electrode plate body 11 and exposes a part of the tab 12, and the exposed portion of the tab 12 is configured to be connected to the electrode terminal 51.

By using the above technical solution, the separator 20 can completely wrap the electrode plate body 11, the portion of the separator 20 covering the electrode plate body 11 is not likely to be folded over, and even if the end portion of the separator 20 is folded over, the electrode plate body 11 is not exposed to cause a short circuit. The first edge portion covers a part of the tab 12, so that the exposed portion of the tab 12 is connected to the electrode terminal 51.

Referring to FIG. 3 to FIG. 6, in some embodiments, the first joint portion 22 is disposed partially overlapping with the tab 12, and the tab 12 is compound and bonded to the first edge portion 211. Alternatively, the first joint portion 22 and the tab 12 are disposed in a staggered manner.

Because the first edge portion 211 covers a part 212 of the tab 12, the first joint portion 22 of two layers of first edge portions 211 may be disposed with the tab 12 in the partial overlapping manner or the staggered manner. For example, the first joint portion 22 extends along the first edge portion 211 and a length of the first joint portion 22 is equal to a length of the first edge portion 211. Therefore, when the two layers of first edge portions 211 are compounded, the tab 12 can be compounded and bonded to the two layers of first edge portions 211. When a length of the first joint portion 22 is less than a length of the first edge portion 211, the first joint portion 22 and the tab 12 may be disposed in the staggered manner.

By using the above technical solution, the tab 12 may be compounded and bonded to the separator layer 21, and the tab 12 and the first joint portion 22 may further be disposed in the staggered manner, which can be flexibly selected according to parameters of the electrode assembly 100 and a process condition.

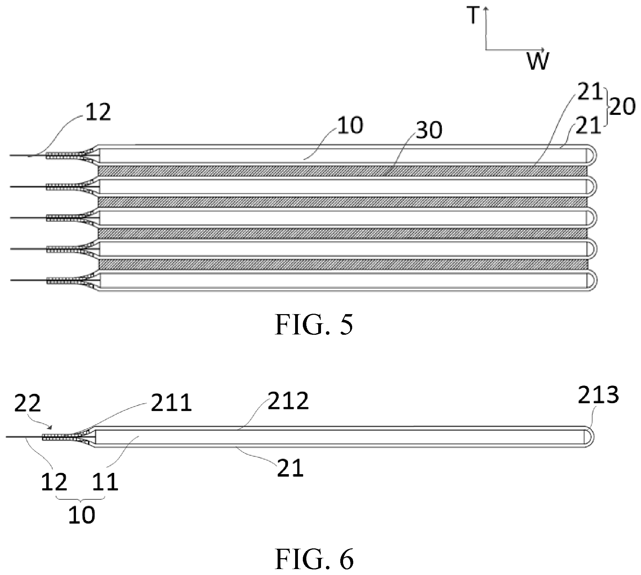

Referring to FIG. 6, the separator layer 21 is further provided with a covering portion 212 covering the electrode plate body 11, where the covering portion 212 is in contact with the electrode plate body 11 in an attaching manner, or a gap is formed between the covering portion 212 and the electrode plate body 11.

The covering portion 212 covers the electrode plate body 11, that is, the covering portion 212 covers the part of the first electrode plate 10 coated with the active substance layer. The covering portion 212 may be in contact with the electrode plate body 11 in the attaching manner, or the gap is formed between the covering portion 212 and the electrode plate body 11.

To reduce a probability that the separator 20 is separated from the electrode plate to cause the electrode plate to be exposed, currently, the separator 20 is mostly compounded to the electrode plate. However, compounding of the separator 20 and the electrode plate mostly includes a rolling process. Rolling on the separator 20 and the electrode plate is likely to cause negative effects on the air permeability of the separator 20, and even may cause closure of a pore passage of the separator 20, thereby causing negative effects on the transmission efficiency of ions such as lithium ions. Rolling the separator 20 and the electrode plate may further cause the part of the separator 20 covered by the active substance layer to reduce the height of the particles, which is not beneficial for the separator 20 to maintain the gap between the electrode plates.

In this embodiment, after being folded, the separator 20 is enabled to wrap the first electrode plate 10 and the first edge portions 211 on a tab 12 side are compounded and connected, so that the separator 20 can be stably fixed to the first electrode plate 10 by using the first joint portion 22, the separator 20 is not likely to be separated from the first electrode plate 10, and the first electrode plate 10 is not likely to be exposed to the outside. Therefore, in this case, the separator 20 does not need to be connected to the first electrode plate 10 by means of rolling or another process. That is, the covering portion 212 may be in contact with the first electrode plate 10 in the attaching manner, or the gap is formed between the covering portion and the first electrode plate 10, so that the covering portion 212 has a relatively good air permeability. In the electrode assembly 100 provided in this embodiment, since the covering portion 212 of the separator 20 is not rolled, the gap between the electrode plates may be maintained at 20 um to 100 um.

By using the above technical solution, the separator layer 21 is in contact with the first electrode plate 10 in the attaching manner or the gap is formed between the separator layer and the first electrode plate 10, and the separator 20 does not need to be compounded and connected to the electrode plate body 11, thereby alleviating a case in which the air permeability of the separator 20 deteriorates due to compounding, and the separator 20 cannot maintain the gap between the electrode plates.

In some embodiments, the air permeability of the covering portion 212 is in a range of 100-300 seconds per cubic centimeter (s/cc). For example, the air permeability of the covering portion 212 may be 100 s/cc, 150 s/cc, 200 s/cc, 250 s/cc, 300 s/cc, or the like.

The air permeability refers to a permeation performance of air passing through fabric (including conventional textiles and articles, non-woven fabrics, a carpet, a high-permeation paper, a filter material, leather, a polyethylene film, a polytetrafluoroethylene film, soft polyurethane foams, and various felts) so as to be expressed as a rate of airflow perpendicularly passing through a test sample under the conditions of a specified test sample area, pressure drop, and time. Therefore, the air permeability represents an amount of air permeating a material per second. In this embodiment, a unit of the air permeability is s/cc, where s is a time measurement unit, referring to seconds, cc is a capacity measurement unit, referring to cubic centimeter (cm3), and a conversion relationship is 1 cubic meter = 1000 cubic decimeters = 1,000,000 cubic centimeters.

If the air permeability of the separator 20 is excessively high, the pore passage of the separator 20 is equivalent to a closed hole, and the ions of the electrolytic solution cannot pass through the pore passage, so that a high ion conduction performance cannot be achieved. An excessively low air permeability indicates that the pore passage of the separator 20 is cut through, the ion transmission resistance is relatively low, and the energy density is relatively high. The function of the covering portion 212 is to enable the ions in the electrolytic solution to pass through and reduce the passage of other substances. Therefore, enabling the air permeability of the covering portion 212 to be in the range of 100 s/cc to 300 s/cc can make the ions pass through at a relatively low resistance, and can also desirably block large particles of other substances. In addition, the air permeability of the first joint portion 22 is greater than 300 s/cc.

According to the electrode assembly 100 provided in the embodiment of the present application, rolling compounding does not need to be performed on the separator 20 and the first electrode plate 10, so that the air permeability of the covering portion 212 can be set in the range of 100 s/cc to 300 s/cc, thereby making the ions have relatively high transmission efficiency, and improving the performance of the battery 300.

As shown in FIG. 6, in some embodiments, the separator layer 21 further includes a second edge portion 213 located at the folded end, and the second edge portion 213 extends beyond the end portion of the first electrode plate 10 in the width direction of the first electrode plate 10.

The second edge portion 213 is located at the folded end of the separator 20, and the second edge portion 213 is located on a non-tab 12 side of the first electrode plate 10. The second edge portion 213 extends beyond the end portion of the first electrode plate 10, so that the two second edge portions 213 jointly wrap the end portion of the first electrode plate 10.

As shown in FIG. 4 to FIG. 6, in some embodiments, end portions of the two second edge portions 213 are integrally connected, and a width of the second edge portion 213 is 1 mm to 5 mm.

The end portions of the two second edge portions 213 are integrally connected, that is, the two second edge portions 213 are integrally connected in a folded manner. A width of the second edge portion 213 is, for example, 1 mm, 2 mm, 3 mm, 4 mm, or 5 mm. If the width of the second edge portion 213 is excessively small, it is likely to cause that it is inconvenient for the two second edge portions 213 to wrap the first electrode plate 10. If the width of the second edge portion 213 is excessively large, the first electrode plate 10 is likely to move between the two separator layers 21, and consequently the stacking alignment precision of the first electrode plate 10 and the second electrode plate 30 is affected, thereby affecting the performance of the electrode assembly 100.

By using the above technical solution, the second edge portions 213 of the two separator layers 21 are integrally connected, and the second edge portions 213 do not need to be compounded and connected by means of rolling, so that the two separator layers 21 can wrap the end portion of the first electrode plate 10, thereby improving the process efficiency. In addition, a width range of the second edge portion 213 is set, which not only helps the separator 20 to wrap the first electrode plate 10, but also is not likely to cause the case that the first electrode plate 10 moves between the two separator layers 21.

Referring to FIG. 4 to FIG. 6, a width of the first edge portion 211 is 1 mm to 20 mm.

The above width range is a width range in the width direction of the first electrode plate 10. The first edge portion 211 is a region of the first electrode plate 10 extending beyond the electrode plate, and the width of the first edge portion 211 is 1 mm to 20 mm in the width direction of the first electrode plate 10, so that the two opposite first edge portions 211 can be compounded and bonded. Further, the width of the first edge portion 211 may be 2 mm to 20 mm. Further, the width of the first edge portion 211 may be 5 mm to 20 mm, thereby facilitating ensuring a compounding and connecting area and connection strength.

If the width of the first joint portion 22 is less than or equal to the width of the first edge portion 211, the width of the first joint portion 22 is 1 mm to 20 mm. Further, in some embodiments, the width of the first joint portion 22 may be 2 mm to 20 mm.

By satisfying the above condition, the two opposite first edge portions 211 both extend beyond the electrode plate body 11 and can be compounded and bonded on an outer side of the electrode plate body 11, so that the relative positions of the separator 20 and the first electrode plate 10 are fixed, the separator 20 is not likely to be folded over, and a body of the tab 12 is not likely to be exposed. In addition, rolling compounding does not need to be performed on the separator 20 and the electrode plate body 11, so as to avoid that air permeability of the separator 20 above the electrode plate body 11 deteriorates and the gap between the electrode plates cannot be effectively maintained.

In some embodiments, the two second edge portions 213 are compounded and connected, a cohesive force is greater than 2 N, and the air permeability of the first joint portion 22 is greater than 300 s/cc. If the two second edge portions 213 are integrally connected directly and are not compounded, the air permeability of the separator 20 at the second edge portion 213 is in the range of 100 s/cc to 300 s/cc.

Referring to FIG. 6, end portions of the two first edge portions 211 are disposed flush with each other. In some embodiments, the end portions of the two first edge portions 211 may also be disposed in a staggered manner, and a misalignment length of the two first edge portions 211 in the width direction of the first electrode plate 10 is 2 mm to 5 mm. The "misalignment length" refers to a length by which one first edge portion 211 extends beyond another first edge portion 211 in the width direction of the first electrode plate 10.

When the end portions of the two first edge portions 211 are disposed flush with each other, the separator 20 is folded in half from a center in a width direction thereof to form the two separator layers 21 having an equal width. When the end portions of the two first edge portions 211 are disposed in the staggered manner, the separator 20 is not folded in half along the center, so that widths of the two separator layers 21 are not equal.

The misalignment length of the two first edge portions 211 is 2 mm to 5 mm, for example, 2 mm, 3 mm, 4 mm, or 5 mm. By controlling the range of the misalignment length of the first edge portions 211, the first joint portion 22 can have a sufficient size, so that the two separator layers 21 are stably and fixedly connected.

An adhesive force of the region of the separator 20 compounded to the first electrode plate 10 is greater than 1 N, an adhesive force of the separator 20 at a region without the tab 12 is greater than 2 N, and the air permeability of the first joint portion 22 is greater than 300 s/cc.

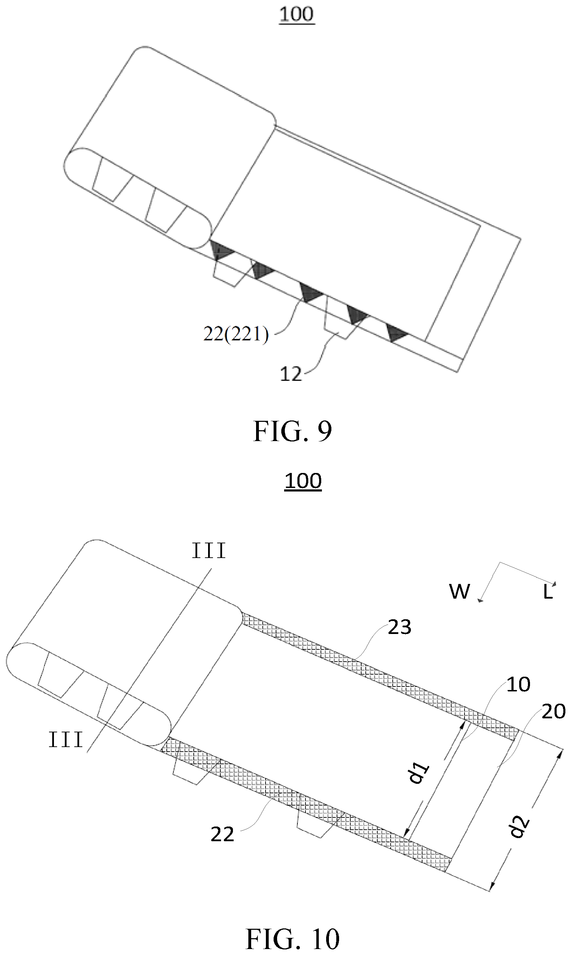

Referring to FIG. 10 to FIG. 13, and FIG. 18, some other embodiments of the present application provide an electrode assembly 100. The electrode assembly 100 includes a first electrode plate 10 and a separator 20. The separator 20 includes two separator layers 21 formed by folding. The separator layer 21 is provided with a first edge portion 211 extending beyond an end portion of the first electrode plate 10 in a width direction of the first electrode plate 10. The first edge portion 211 is disposed at an end of the separator layer 21 away from a folded end. The first edge portions 211 of the two separator layers 21 are connected to each other and form a first joint portion 22. The separator layer 21 is further provided with a second edge portion 213 located at the folded end, and the second edge portion 213 extends beyond an end portion of the first electrode plate 10 in the width direction of the first electrode plate 10.

In this embodiment, the two second edge portions 213 are connected to each other and form a second joint portion 23, that is, the two second edge portions 213 can also be compounded and bonded by means of at least one manner of rolling, fusion, ultrasonic welding, and adhesive bonding.

The second joint portion 23 formed by the two second edge portions 213 may have a structure same as or different from that of the first joint portion 22 formed by the two first edge portions 211. Optionally, the first joint portion 22 and the second joint portion 23 are symmetrically disposed. It can be understood that the first joint portion 22 and the second joint portion 23 may also be asymmetrically disposed, while a connection effect of the separator layer 21 is not affected.

By using the above technical solution, the separator layer 21 is also compounded and bonded at the folded end of the separator 20, that is, the separator 20 has a joint portion formed on both opposite sides of the first electrode plate 10. In this way, the first electrode plate 10 is not likely to move between the two separator layers 21, which facilitates stacking alignment of the first electrode plate 10 and the second electrode plate 30, thereby helping ensure the electrical performance of the electrode assembly 100.

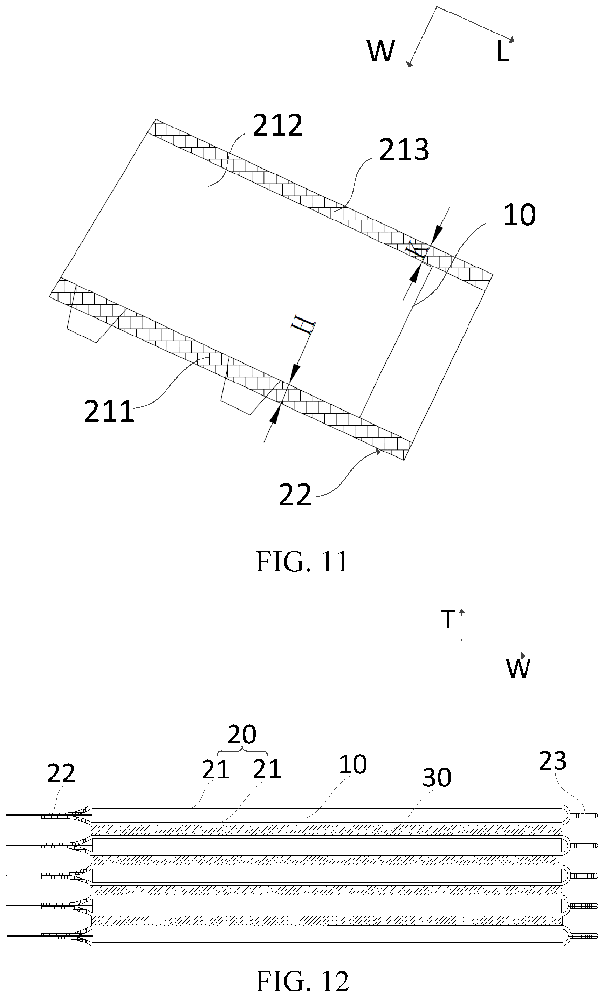

As shown in FIG. 11, in some embodiments, a width K of the second edge portion 213 is 1 mm to 20 mm.

The width of the second edge portion 213 is 1 mm to 20 mm, for example, 1 mm, 2 mm, 5 mm, 10 mm, or 20 mm. By satisfying the above range, the two opposite second edge portions 213 can be conveniently compounded and bonded, and the second edge portion 213 does not need to be set excessively wide, so as to reduce the probability of folding over of the second edge portion 213. In addition, a width of the second joint portion 23 is less than or equal to the width of the second edge portion 213, and the width of the second joint portion 23 may be 1 mm to 20 mm. Further, a range of the width of the second joint portion 23 is 2 mm to 20 mm.

FIG. 11 further shows a width H of the first edge portion 211. The width H of the first edge portion 211 may also be 1 mm to 20 mm, where the widths of the first edge portion 211 and the second edge portion 213 may be equal or unequal.

In some embodiments, the second joint portion 23 and the first joint portion 22 are symmetrically disposed, that is, the second joint portion 23 and the first joint portion 22 are symmetrically disposed relative to a center line of the separator 20, and sizes and patterns of the first joint portion 22 and the second joint portion 23 are the same. In this way, when the electrode assembly is manufactured, the first joint portion 22 and the second joint portion 23 can be simultaneously formed by using one compounding process, thereby improving manufacturing efficiency.

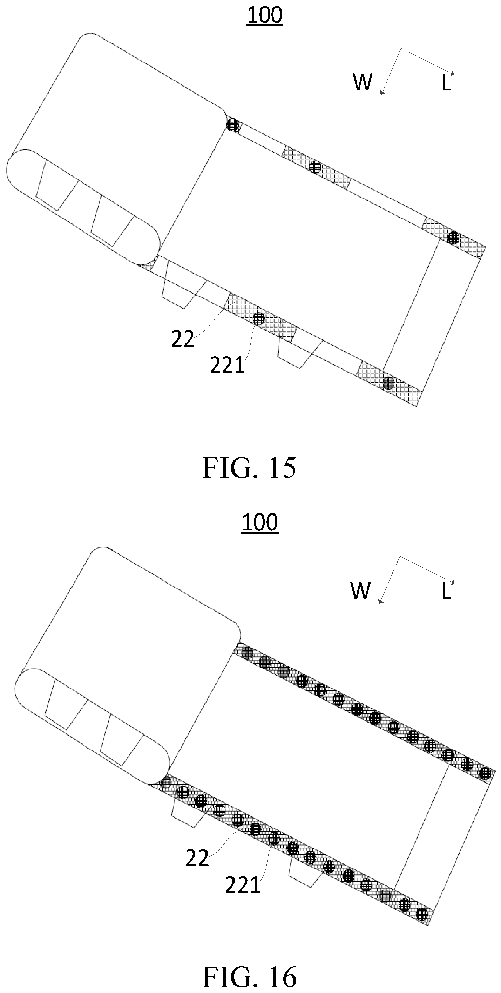

Referring to FIG. 3 to FIG. 18, in some embodiments, in the width direction of the electrode plate, a width by which the tab 12 extends beyond the first edge portion 211 is 1 mm to 40 mm.

Specifically, the width by which the tab 12 extends beyond the first edge portion 211 may be 1 mm, 5 mm, 10 mm, 20 mm, 40 mm, or the like. The tab 12 needs to be electrically connected to the electrode terminal 51, and the tab 12 needs to partially extend beyond the first edge portion 211. It can be understood that a maximum width by which the tab 12 extends beyond the first edge portion 211 is related to an extension size of the tab 12.

By satisfying the above condition, a range of the width by which the tab 12 extends beyond the separator 20 is set, and the part of the tab 12 exposed outside the separator layer 21 can be stably connected to the electrode terminal 51.

In some embodiments, in the width direction (W direction) of the first electrode plate 10, a width of the part 212 of the tab 12 covered by the separator layer 21 occupies 1/3 to 2/3 of the width of the tab 12.

The tab 12 may be covered by the first edge portion 211, or may be covered by both the first edge portion 211 and a region of the separator layer 21 close to the first edge portion 211. Specifically, the width of the part 212 of the tab 12 covered by the separator layer 21 may occupy 1/3, 1/2, 2/3, or the like of the width of the tab 12.

If the width of the part of the tab 12 covered by the separator layer 21 is excessively small, that is, the width of the first edge portion 211 is excessively small, the two separator layers 21 may be separated due to a problem that the size of the joint portion is insufficient. If the width of the part of the tab 12 covered by the separator layer 21 is too large, it is inconvenient for the tab 12 to be connected to the electrode terminal 51.

A range of a ratio of the width of the part of the tab 12 covered by the separator layer 21 to the width of the tab 12 is set in the above condition. By using the above technical solution, the joint portion has relatively high stability and thus is not likely to be disintegrated. In addition, the tab 12 can be stably connected to the electrode terminal 51.

Referring to FIG. 4, FIG. 8, FIG. 10, and FIG. 16, in some embodiments, the first joint portion 22 is continuously distributed in a length direction of the separator 20, that is, the first joint portion 22 is in a shape of a strip and extends in the length direction of the separator 20.

During manufacturing, the folded separator 20 wraps the first electrode plate 10, and the first edge portion 211 of the separator layer 21 extends beyond the electrode plate body 11. The two first edge portions 211 are compounded and connected in a continuous compounding manner to form the continuous first joint portion 22. For the continuous first joint portion 22, an adhesion force of the first joint portion 22 is greater than 2 N.

Using a rolling compounding manner as an example, rolling compounding may be performed on the two first edge portions 211 by using a compounding roller, to form the first joint portion 22 extending in the length direction of the separator 20. A manner of adhesive bonding is used as an example, and the first edge portion 211 is coated with adhesive in a continuous coating manner. It can be understood that the first joint portion 22 may also be compounded in another continuous compounding manner.

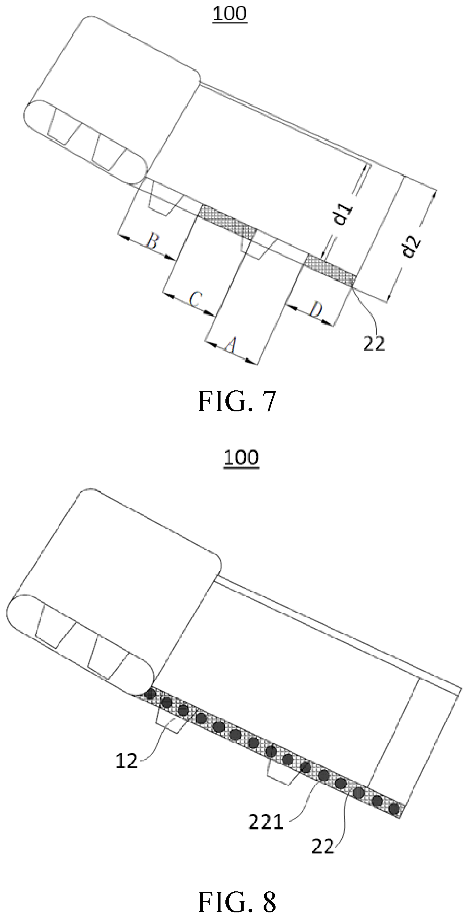

Referring to FIG. 7, FIG. 9, FIG. 14, and FIG. 15, in some other embodiments, the plurality of first joint portions 22 are distributed at intervals in the length direction of the separator 20.

During manufacturing, the two first edge portions 211 are compounded in an intermittent compounding manner to form a discontinuous first joint portion 22. For the discontinuous first joint portion 22, an adhesion force of the first joint portion 22 is greater than 1 N.

Using the rolling compounding manner as an example, the compounding roller is provided with a plurality of bumps distributed at intervals, that is, roll compounding may be performed on the two first edge portions 211 by using the plurality of bumps, to form a plurality of first joint portions 22 distributed at intervals in the length direction of the separator 20. A manner of adhesive bonding is used as an example, and the first edge portion 211 is coated with adhesive in an intermittent coating manner. It can be understood that the first joint portion 22 may also be compounded in another intermittent compounding manner.

It can be understood that both the first joint portion 22 on the first edge portion 211 and the second joint portion 23 on the second edge portion 213 can be implemented by means of continuous compounding or intermittent compounding. Therefore, the second joint portion 23 can be continuously distributed in the length direction of the separator 20 or the plurality of second joint portions 23 are distributed at intervals in the length direction of the separator 20.

According to the electrode assembly 100 provided in the embodiments of the present application, the two first edge portions 211 can be connected to each other to form the continuous first joint portion 22 or the plurality of first joint portions 22 disposed at an interval, and in both cases, the two separator layers 21 can be stably connected, and a manufacturing manner is flexible and convenient.

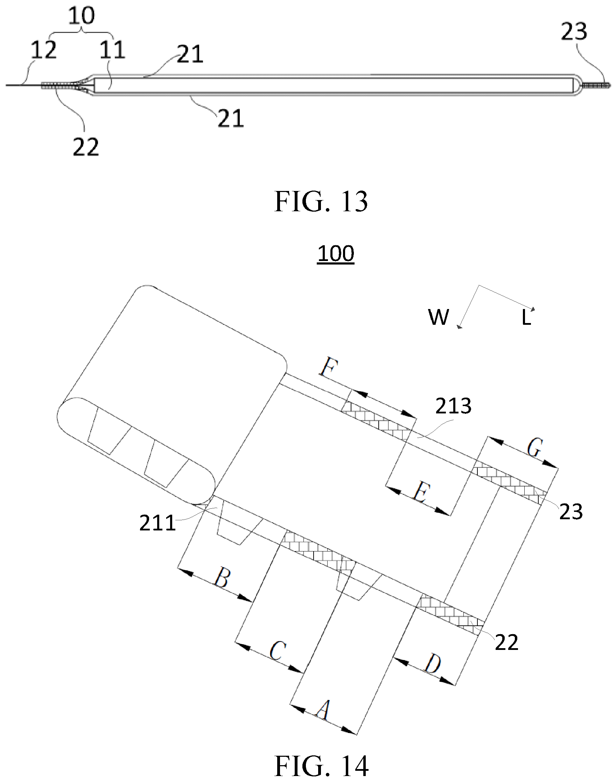

Referring to FIG. 7 and FIG. 14, in some embodiments, the plurality of first joint portions 22 are disposed at equal intervals, a length of the first joint portion 22 is greater than 2 mm, and an interval between every two adjacent first joint portions 22 is 2 mm to 100 mm.

In this embodiment, the plurality of first joint portions 22 are disposed at equal intervals, so that a binding force between the two separator layers 21 is relatively uniform. In another embodiment, the plurality of first joint portions 22 may also be disposed at unequal intervals. When the separator 20 further includes a plurality of second joint portions 23, the plurality of second joint portions 23 may also be disposed at equal intervals, a length of the second joint portion 23 is greater than 2 mm, and an interval between every two adjacent second joint portions 23 is 2 mm to 100 mm.

A length of the first joint portion 22 is a length of the first joint portion 22 in the length direction of the separator 20, that is, a length of the first joint portion 22 in the L direction. FIG. 7 shows that the plurality of first joint portions 22 at intervals are disposed on the first edge portion 211, and FIG. 14 shows that the first joint portion 22 is disposed on the first edge portion 211 and the second joint portion 23 is disposed on the second edge portion 213. The two first joint portions 22 on the first edge portion 211 have a width C and a width D, and the width C and the width D both have a length of greater than 2 mm, to ensure the compounding strength. The width C and the width D may be equal or unequal.

The second joint portion 23 on the second edge portion 213 has a width F and a width G. The width F and the width G both have a length of greater than 2 mm, and the width F and the width G may be equal or unequal.

FIG. 7 shows an interval B and an interval A between the first joint portions 22 on the first edge portion 211, and FIG. 14 further shows an interval F between the second joint portions 23 on the second edge portion 213. In this embodiment, the interval B is equal to the interval A, and the intervals A, B, and F all have a length in a range of 2 mm to 100 mm.

By using the above technical solution, the two separator layers 21 are connected to each other through a plurality of joint portions, and the length of the joint portion satisfies the above condition, so that the two separator layers 21 can be stably and reliably connected, and are not likely to be separated to expose the electrode plate body 11. The interval between the joint portions has a relatively large selection range, which may be flexibly set according to parameters of the electrode assembly 100 and a process condition.

Referring to FIG. 8, FIG. 9, FIG. 15, and FIG. 16, in some embodiments, a connection pattern 221 is formed on the first joint portion 22, and the two separator layers 21 are connected at the connection pattern 221.

The connection pattern 221 is a pattern formed by compounding. There may be one or more connection patterns 221. When there are a plurality of connection patterns 221, the plurality of connection patterns 221 are disposed at intervals. Similarly, a connection pattern may also be formed on the second joint portion 23.

Specifically, as shown in FIG. 9, the first joint portion 22 may include only the connection pattern 221, and the first joint portion 22 is manufactured through one compounding process. As shown in FIG. 8, FIG. 15, and FIG. 16, the first joint portion 22 includes a strip-shaped portion and the connection pattern 221 disposed on the strip-shaped portion. The strip-shaped portion may extend in the length direction of the separator 20 or a plurality of strip-shaped portions are distributed at intervals in the length direction of the separator 20. The strip-shaped portion and the connection pattern 221 are manufactured through two compounding processes, that is, the strip-shaped portion is manufactured through a first compounding process (continuous compounding or intermittent compounding), and then the connection pattern 221 is manufactured by means of a second compounding process (intermittent compounding). The connection pattern 221 can enhance the adhesion strength of the two separator layers 21.

By using the above technical solution, the two separator layers 21 are connected at the connection pattern 221, so as to implement compounding and connecting. The connection pattern 221 can enhance an adhesion strength of the two separator layers 21, thereby further reducing a probability of separation of the two separator layers 21.

In some embodiments, the connection pattern 221 includes at least one of a dot pattern, a stripe pattern, a polygon pattern, a circular pattern, and an elliptic pattern. The polygon includes a triangle, a square, a rhombus, a pentagon, and a hexagon, and the polygon may be a regular figure or an irregular figure.

Specifically, the connection pattern 221 may be manufactured by using a printing roller having a printing pattern, or may be manufactured in a manner of ultrasonic welding. It can be understood that the connection pattern 221 may also be manufactured in another compounding manner.

Because the connection pattern 221 has a preset shape, the two separator layers 21 are not likely to be separated along the connection pattern 221, thereby further reducing a probability of separation of the two separator layers 21 and a probability of folding over of the separator 20.

In the electrode assembly 100 provided in the above embodiment, a length of the tab 12 may be less than or equal to a length of an electrode plate body 11.

Referring to FIG. 4 to FIG. 16, a length of the tab 12 is less than a length of the electrode plate body 11. The tab 12 may be manufactured by means of die cutting, so that the tab 12 is in a sheet shape and projects from one side of the electrode plate body 11. In an unfolded state, a plurality of tabs 12 are distributed at intervals in the length direction of the first electrode plate 10. In a wound state, the plurality of tabs 12 are disposed in a stacked manner and fixedly connected.

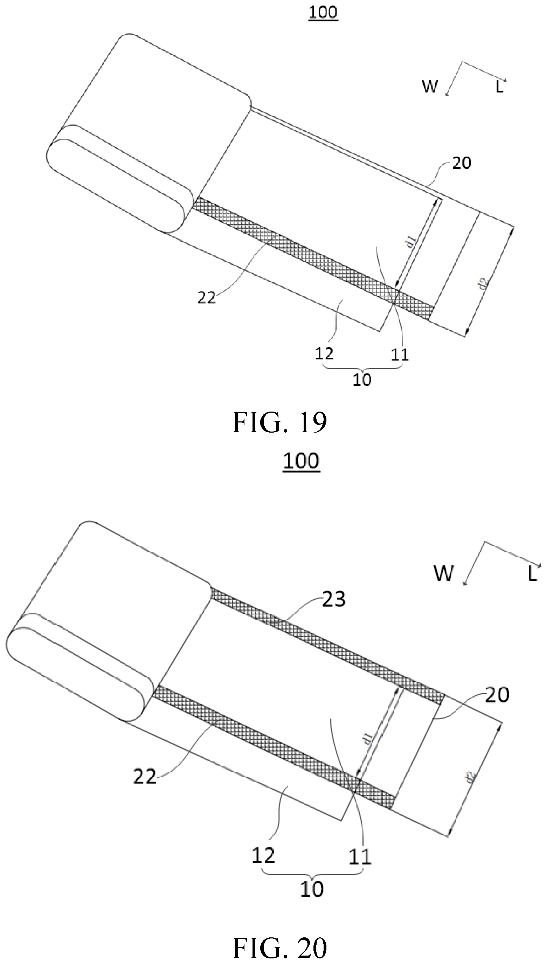

Referring to FIG. 19 and FIG. 20, the length of the tab 12 is equal to a length of the electrode plate body 11, and the tab 12 is in a strip shape and extends along the electrode plate body 11, that is, the first electrode plate 10 is in an all-tab structure. When the first electrode plate 10 is manufactured, the region of the tab 12 is not processed in the coating process, and the tab 12 does not need to be coated with the active substance layer.

As shown in FIG. 19 and FIG. 20, d1 is a width of the electrode plate body 11, d2 is a width of the separator 20 after being folded, and a part of the tab 12 extending beyond the separator 20 is configured to be connected to an electrode terminal. In the embodiment shown in FIG. 19, the separator 20 is provided with the first joint portion 22 on one side of the tab 12. The first joint portion 22 is disposed partially overlapping with the tab 12, and the tab 12 extends beyond the first joint portion 22. In the embodiment shown in FIG. 20, the separator is provided with the first joint portion 22 on one side of the tab 12, and is provided with the second joint portion 23 on a non-tab side. In addition, the part (tab root part) of the tab 12 covered by the separator 20 may be compounded and bonded to, partially compounded and bonded to, or not compounded or bonded to the separator.

In the electrode assembly 100 provided in the embodiment of the present application, the separator 20 may wrap the first electrode plate 10 in the die-cut tab structure or the first electrode plate 10 in the all-tab structure. In such an electrode assembly 100, relative positions of the separator 20 and the first electrode plate 10 can be fixed, reducing a probability of folding over of the separator 20. Even if the separator 20 is folded over, it is not likely to cause contact and a short circuit of adjacent electrode plates.

Referring to FIG. 18 and FIG. 19 again, the electrode assembly 100 further includes a second electrode plate 30, and the first electrode plate 10, the separator 20, and the second electrode plate 30 are wound. One of the first electrode plate 10 and the second electrode plate 30 is a cathode plate, and the other is an anode plate.

The separator 20 wraps the first electrode plate 10 to separate the first electrode plate 10 and the second electrode plate 30, and the separator 20 can further maintain an electrode plate gap in the electrode assembly 100.

The electrode assembly 100 provided in the embodiment of the present application uses a wound structure, and the first electrode plate 10 wrapped by the separator 20 may be the cathode plate or the anode plate. A case in which the separator 20 is folded over to cause a short circuit between the cathode and anode plates is not likely to occur in the wound electrode assembly 100.

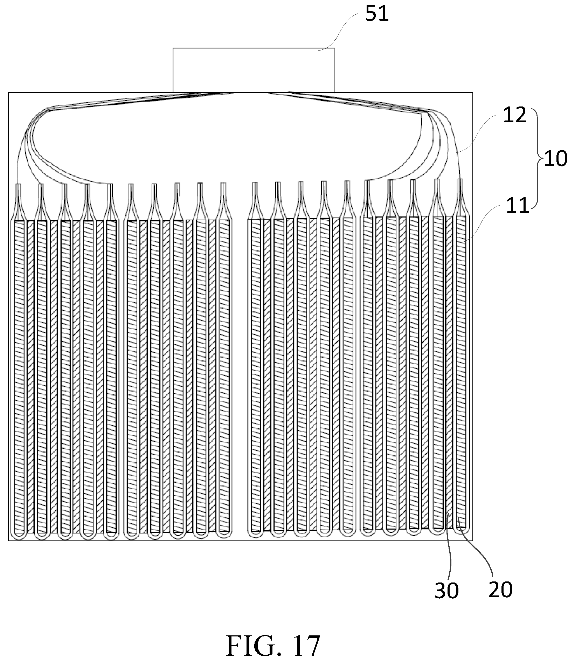

Referring to FIG. 3 to FIG. 20, some embodiments of the present application provide an electrode assembly 100. The electrode assembly 100 may be applied to a square battery cell, or may be applied to a cylindrical battery cell. The electrode assembly 100 includes a first electrode plate 10 and a separator 20. The first electrode plate 10 includes an electrode plate body 11 and a tab 12. The separator 20 includes two separator layers 21 disposed in a stacked manner. The two separator layers 21 respectively cover two opposite ends of the first electrode plate 10 in a thickness direction thereof. The separator 20 has a first edge portion 211 and a second edge portion 213 extending beyond the electrode plate body 11 in a width direction of the first electrode plate 10 and a covering portion 212 located between the first edge portion 211 and the second edge portion 213. The first edge portion 211 covers a part 212 of the tab 12, and the second edge portion 213 is located at a folded end of the separator 20. The two opposite first edge portions 211 are connected to each other and form a first joint portion 22. The two opposite second edge portions 213 may be integrally connected or form a second joint portion 23. As shown in FIG. 17 and FIG. 18, the tab 12 is disposed on a side of the electrode assembly 100 facing the electrode terminal 51, and a part of the tab 12 not covered by the separator 20 is configured to be connected to the electrode terminal 51.

In the above electrode assembly 100, the separator 20 can completely wrap the electrode plate body 11, and the separator 20 is not likely to be folded over, and even if the separator is folded over, the electrode plate body 11 is not exposed, thereby not causing a short circuit between adjacent cathode and anode plates, and improving the yield of a battery cell and a battery.

The electrode assembly 100 further includes a second electrode plate 30, and the second electrode plate 30, the separator 20, and the first electrode plate 10 are stacked and wound. It can be understood that the second electrode plate 30 may also be wrapped in the separator 20.

An embodiment of a second aspect of the present application provides a battery cell 200, including the electrode assembly 100 according to the first aspect.

Referring to FIG. 3, the battery cell 200 includes an end cover 50, a case 40, an electrode assembly 100, and other functional components. The number of electrode assemblies 100 may be one or more.

Referring to FIG. 1 to FIG. 3, an embodiment of a third aspect of the present application provides a battery 300, including the battery cell 200 according to the second aspect.

In the battery 300, the battery cell 200 may be a square case battery cell, or a cylindrical battery cell. There may be a plurality of battery cells 200, and the plurality of battery cells 200 may be connected in series, parallel, or series-parallel.

An embodiment of a fourth aspect of the present application provides a power consuming apparatus 1000, including the battery 300 according to the third aspect.

The above embodiments are for description of the technical solutions of the present application only rather than for limiting the present application. Although the present application has been described in detail with reference to the above embodiments, those of ordinary skill in the art should appreciate that they can still make modifications to the technical solutions described in the above embodiments or make equivalent replacements to some technical features thereof without departing from the spirit and scope of the technical solutions of the embodiments of the present application, and both the modifications and the replacements are to be included in the protection scope of the present application.

## Claims

1. An electrode assembly, comprising:
a first electrode plate; and
a separator, wherein the separator comprises two separator layers formed by folding, and the two separator layers cover two opposite ends of the first electrode plate in a thickness direction thereof, respectively; and
the separator layer is provided with a first edge portion extending beyond an end portion of the first electrode plate in a width direction of the first electrode plate, the first edge portion is opposite to a folded end of the separator, and the first edge portions of the two separator layers are connected to each other and form a first joint portion.

2. The electrode assembly according to claim 1, wherein the first electrode plate comprises an electrode plate body and a tab extending outward from an edge of the electrode plate body, the tab and the first edge portion are disposed on a same side of the electrode plate body, and the first edge portion covers a part of the tab in the width direction of the first electrode plate.

3. The electrode assembly according to claim 2, wherein a length of the tab is less than or equal to a length of the electrode plate body.

4. The electrode assembly according to claim 3, wherein the first joint portion is disposed partially overlapping with the tab, and the tab is compounded and bonded to the first edge portion; or
the first joint portion and the tab are disposed in a staggered manner.

5. The electrode assembly according to claim 2, wherein the separator layer is further provided with a covering portion covering the electrode plate body, wherein
the covering portion is in contact with the electrode plate body in an attaching manner, or a gap is formed between the covering portion and the electrode plate body.

6. The electrode assembly according to claim 5, wherein air permeability of the covering portion is in a range of 100 s/cc to 300 s/cc.

7. The electrode assembly according to any one of claims 2 to 6, wherein the separator layer is further provided with a second edge portion located at the folded end, and the second edge portion extends beyond the end portion of the first electrode plate in the width direction of the first electrode plate.

8. The electrode assembly according to claim 7, wherein end portions of the two second edge portions are integrally connected, and a width of the second edge portion is 1 mm to 5 mm.

9. The electrode assembly according to claim 7, wherein the two second edge portions are connected to each other and form a second joint portion.

10. The electrode assembly according to claim 9, wherein in the width direction of the first electrode plate, a width of the second edge portion is 1 mm to 20 mm.

11. The electrode assembly according to claim 9, wherein the second joint portion and the first joint portion are symmetrically disposed.

12. The electrode assembly according to any one of claims 2 to 11, wherein in the width direction of the first electrode plate, a width by which the tab extends beyond the first edge portion is 1 mm to 40 mm.

13. The electrode assembly according to any one of claims 2 to 12, wherein in the width direction of the first electrode plate, a width of a portion of the tab covered by the separator layer occupies 1/3 to 2/3 of a width of the tab.

14. The electrode assembly according to any one of claims 1 to 13, wherein in the width direction of the first electrode plate, a width of the first edge portion is 1 mm to 20 mm.

15. The electrode assembly according to claim 14, wherein in the width direction of the first electrode plate, a width of the first joint portion is 2 mm to 20 mm.

16. The electrode assembly according to any one of claims 1 to 15, wherein in the width direction of the first electrode plate, a misalignment length of the two first edge portions is 2 mm to 5mm.

17. The electrode assembly according to any one of claims 1 to 16, wherein the first joint portion is continuously distributed in a length direction of the separator; or
a plurality of first joint portions are distributed at intervals in the length direction of the separator.

18. The electrode assembly according to claim 17, wherein the plurality of first joint portions are disposed at equal intervals in the length direction of the separator, a length of the first joint portion is greater than 2 mm, and an interval between every two adjacent first joint portions is 2 mm to 100 mm.

19. The electrode assembly according to claim 17, wherein a connection pattern is formed on the first joint portion, and the two separator layers are connected at the connection pattern.

20. The electrode assembly according to claim 19, wherein the connection pattern comprises at least one of a dot pattern, a stripe pattern, a polygonal pattern, a circular pattern, and an elliptic pattern.

21. The electrode assembly according to any one of claims 1 to 20, wherein the electrode assembly further comprises a second electrode plate, and the first electrode plate, the separator, and the second electrode plate are wound; and one of the first electrode plate and the second electrode plate is a cathode plate, and the other is an anode plate.

22. A battery cell, wherein the battery cell comprises the electrode assembly according to any one of claims 1 to 21.

23. A battery, wherein the battery comprises the battery cell according to claim 22.

24. A power consuming apparatus, wherein the power consuming apparatus comprises the battery according to claim 23.
